# EUROPÄISCHE PATENTANMELDUNG

(11) **EP 4 001 185 A1**
(43) Veröffentlichungstag der Anmeldung: **25.05.2022**
(21) Anmeldenummer: 20208783.9
(22) Anmeldetag: 20.11.2020
(51) Int. Cl.: B65G 43/08, B07C 3/08, B07C 5/04, B64F 1/36, B65G 47/54, B65G 47/57

(54) **TRANSPORTBEHÄLTER-FÖRDERSYSTEM UND VERFAHREN ZUM OPTIMIERTEN BETREIBEN EINES TRANSPORTBEHÄLTER-FÖRDERSYSTEMS**

(71) Anmelder: Siemens Aktiengesellschaft, 80333 München (DE)
(72) Erfinder: KLOSSEK, Andreas, 90547 Stein-Deutenbach (DE)
(74) Vertreter: Siemens Patent Attorneys

(57) **Zusammenfassung**

Transportbehälter-Fördersysteme für unterschiedlich dimensionierte Stückgüter zeichnen sich aus durch eine suboptimale Raumausnützung, bei Transport und Speicherung.

Die Erfindung offenbart ein Verfahren zum optimierten Betreiben eines Transportbehälter-Fördersystems (2) für Stückgüter (6), insbesondere eines Flughafen-Gepäckfördersystems, mit den Verfahrensschritten:
a) Einbringen eines Stückguts (6) an einer Einbringstelle in das Fördersystem (2);
b) Bereitstellen von größeren Transportbehältern einer ersten Klasse (4a) und kleineren Transportbehältern einer zweiten Klasse (4b) zur Aufnahme von jeweils einem Stückgut (6);
c) Automatisiertes Erfassen einer Abmessung des Stückguts (6) .
d) Abhängig von der erfassten Abmessung automatisiertes Zuordnen des Stückguts (6) zu einem Transportbehälter erster oder zweiter Klasse (4a, 4b).
e) Automatisiertes Beladen des zugeordneten Transportbehälters (4a, 4b) mit dem Stückgut (6);
f) Transportieren des mit dem Stückgut (6) beladenen Transportbehälters (4a, 4b) auf aktiven Förderstrecken (10).
g) Durchführen der Verfahrensschritte a) bis f) für ein weiteres Stückgut (6).

Die Erfindung offenbart ein Fördersystem (2) umfassend Mittel zur Anwendung des Verfahrens.

## Beschreibung

Die vorliegende Erfindung betrifft das technische Gebiet der Fördersysteme für Stückgüter, insbesondere der Fördersysteme bei denen die Stückgüter in Transportbehältern transportiert werden und noch spezieller Flughafen-Gepäckfördersysteme.

Ein Ziel eines jeden Flughafenbetreibers ist es, seine Gepäckfördersysteme möglichst effizient zu betreiben. Die Kapazität eines jeden Gepäckfördersystems ist beschränkt durch den auf seinen Förderstrecken und in seinen Frühgepäckspeichern zur Verfügung stehenden Platz. Je grösser die zum Einsatz kommenden Transportbehälter sind, umso mehr Platz wird benötigt.

Die Transportbehälter werden beim oder nach Check-In mit den Gepäckstücken beladen, meist von oben oder auch seitlich. Die Größe der Transportbehälter wird abhängig von den Anforderungen des Flughafens derart gewählt, dass der Großteil aller Gepäckstücke auf die ausgewählten Transportbehälter passt. Gepäckstücke, welche die maximale Transportbehältergröße überschreiten, werden als Sperrgepäck behandelt. Sperrgepäck wird bei der Gepäckaufgabe manuell aussortiert und in speziellen Sperrgepäck-Transportbehältern behandelt. Diese Sperrgepäck-Transportbehälter können auf manchen - nicht allen - Fördersystemen ebenfalls transportiert und abgefertigt werden, werden allerdings an anderen Punkten beladen und in das Fördersystem eingebracht und ausgeschleust als die Transportbehälter für das Normalgepäck. Die Wahl der in einer Gepäckförderanlage eingesetzten Transportbehältergröße hängt von den Anforderungen eines Kunden an. Diese Anforderungen sind regional unterschiedlich.

Da die Transportbehältergröße anhand der Dimension des größten zu fördernden Gepäckstücks (Check-in-Gepäckstück, kein Sperrgepäck) festgelegt wird, sind die Transportbehälter für einen Teil der Transportgüter überdimensioniert und somit erfolgt ein zumindest teilweiser "Leertransport". In Gepäckspeichern wird viel leerer Raum gestapelt.

Eine bessere Ausnutzung der existierenden Gepäckförderanlagen erhöht deren Effizienz, erhöht den maximal möglichen Durchsatz, so dass existierende Gepäckförderanlagen, die an ihre Grenzkapazität stoßen, ohne platz-, komponenten- und kostenintensive Erweiterungen weiterverwendet werden können. Neue Gepäckförderanlagen können kleiner konzipiert werden.

Der vorliegenden Erfindung liegt daher die Aufgabe zugrunde, eine verbesserte Gepäckförderanlage bereitzustellen. Diese Aufgabe wird durch ein Verfahren und ein Fördersystem mit den Merkmalen der Hauptansprüche gelöst. Vorteilhafte Ausgestaltungen der Erfindung ergeben sich aus den Unteransprüchen.

Die erfindungsgemäße Lösung betrifft ein Verfahren zum optimierten Betreiben eines Fördersystems für Stückgüter variabler Größe in Transportbehältern, insbesondere für Gepäckstücke eines Flughafen-Gepäckfördersystems, wobei das Fördersystem aktive Förderstrecken umfasst. Das Verfahren umfasst die Verfahrensschritte:
a) Einbringen eines Stückguts an einer Einbringstelle in das Fördersystem, wobei weitere Stückgüter unabhängig von ihrer Abmessung an derselben Einbringstelle in das Fördersystem (2) eingebracht werden können.
b) Bereitstellen von Transportbehältern einer ersten und einer zweiten Klasse zur Aufnahme von jeweils einem Stückgut, wobei die Transportbehälter erster Klasse größer sind als die Transportbehälter zweiter Klasse und die Transportbehälter auf denselben aktiven Förderstrecken des Fördersystems transportierbar sind.
c) Automatisiertes Erfassen mindestens einer Abmessung, vorzugsweise einer Länge, des Stückguts.
d) in Abhängigkeit von der erfassten Abmessung des Stückguts automatisiertes Zuordnen des Stückguts zu einem Transportbehälter erster oder zweiter Klasse durch ein von dem Fördersystem umfasstes Hintergrundsystem.
e) Transportieren des Stückguts hin zu einer Beladestelle und automatisiertes Beladen des zugeordneten Transportbehälters mit dem Stückgut an der Beladestelle.
f) Transportieren des mit dem Stückgut beladenen Transportbehälters auf der oder den aktiven Förderstrecken hin zu einem dem Stückgut zugeordneten Sortierziel.
g) Durchführen der Verfahrensschritte a) bis f) für ein weiteres Stückgut.

Die Transportbehälter sind vorzugsweise passiv und werden von den aktiven Förderstrecken direkt oder indirekt aufliegend transportiert, so dass die Transportbehälter kostengünstig sind und keine eigenen bzw. zugeordneten Fahreinheiten jeweils umfassend aktive Fördermittel wie beispielsweise AGVs aufweisen müssen. Das Fördersystem kann zudem dazu ausgestaltet sein, weitere mit Stückgütern befüllte Transportbehältern (beispielsweise Transportbehälter für Sperrgepäck) zu transportieren, wobei diese Transportbehälter an anderer Stelle in das Fördersystem eingebracht werden können aber nicht müssen. Auch wenn das Verfahren vorzugsweise für Normalgepäck als Stückgüter vorgesehen ist, kann es auch für Sperrgepäckstücke verwendet werden oder für eine Mischung aus Normal- und Sperrgepäck. Das Einbringen der für das Verfahren vorgesehenen Stückgüter kann an derselben oder an unterschiedlichen Einbringstellen erfolgen, entscheidend ist, dass an der Einbringstelle noch keine Triage der für das Verfahren vorgesehenen Stückgüter notwendig ist.

Bereitgestellt werden mindestens zwei Klassen von Transportbehältern, die jeweils zur Aufnahme von mindestens einem Stückgut entsprechender Größe ausgestaltet sind und die Stückgüter werden abhängig von ihrer erfassten Abmessung automatisiert zu einer der mindestens zwei Klassen zugeordnet. Das Verfahren ist anwendbar für Stückgüter in einem

Die erfindungsgemäße Lösung zeichnet sich aus durch das nicht-manuelle Zuordnen des Stückguts zu einer Klasse von Transportbehältern in Abhängigkeit von der erfassten Abmessung des Stückguts. Durch das Bereitstellen von unterschiedlich großen Transportbehältern und die Zuordnung des Stückguts zu der passenden Transportbehältergröße, also den Transportbehältern erster oder zweiter Klasse, wird die Raumausnutzung der Transportbehälter verbessert; größere Transportbehälter erster Klasse müssen nur für große Stückgüter herangezogen werden. Ein einem Transportbehälter erster bzw. zweiter Klasse zugeordnetes Stückgut kann auch als Stückgut erster bzw. zweiter Klasse bezeichnet werden, selbiges gilt für weitere Klassen von Transportbehältern. Der Großteil der Stückgüter hat kleinere Ausmaße und für diese kleineren Stückgüter (zweiter Klasse) sind kleinere Transportbehälter (zweiter Klasse) ausreichend groß dimensioniert. Dennoch ist es natürlich bei Mangel an kleineren Transportbehältern (zweiter Klasse) möglich, ein von seinen Abmessungen auch in einen kleineren Transportbehälter (zweiter Klasse) passendes Stückgut (zweiter Klasse) in einen Transportbehälter erster Klasse zu laden. Natürlich ist es auch möglich, kleine Stückgüter zweiter Klasse bei gleichem Sortierziel gemeinsam in einen Transportbehälter zu laden, in einen Transportbehälter zweiter Klasse bei sehr kleinen Stückgütern oder in einen Transportbehälter erster Klasse.

Die Erfindung findet Anwendung im Bereich der Flughafen-Gepäckfördersysteme, kann aber auch für andere Logistiksysteme wie Paketsortieranlagen herangezogen werden. Das Sortierziel kann ein bestimmter Flug, ein Frühgepäckspeicher bei Early-CheckIn sein.

Die erfindungsgemäße Lösung kann durch verschiedene, jeweils für sich vorteilhafte und, sofern nicht anders ausgeführt, beliebig miteinander kombinierbarer Ausgestaltungen weiter verbessert werden. Auf diese Ausgestaltungsformen und die mit ihnen verbundenen Vorteile wird im Folgenden eingegangen.

Das Spektrum der Transportbehälterklassen kann prinzipiell beliebig erweitert werden, jedoch ist aus Optimierungsgründen die Anzahl an Transportbehälterklassen gering zu halten, da auch ein Rücktransport und eine Bereitstellung mit einer separaten, individuellen Zuführung der Transportbehälter unterschiedlicher Klassen erfolgen muss.

Das einem Transportbehälter erster bzw. zweiter Klasse zugeordnete Stückgut wird als Stückgut erster bzw. zweiter Klasse bezeichnet werden, so dass ein Stückgut erster Klasse zumindest mit einer Abmessung größer ist als ein Stückgut zweiter Klasse. Natürlich kann dennoch bei einem Mangel an Transportbehältern zweiter Klasse ein Stückgut zweiter Klasse in einen Transportbehälter erster Klassen geladen werden. Die Größe des kleineren Transportbehälters (zweiter Klasse) bestimmt die maximal zulässigen Abmessungen eines (kleineren) Stückguts zweiter Klasse. Sobald ein Stückgut zu groß ist, um in einen Transportbehälter zweiter Klasse zu passen, wird es als Stückgut erster Klasse bezeichnet und einem Transportbehälter erster Klasse zugeordnet.

Als Abmessungen werden die relevanten, kennzeichnenden Außenmaße des Stückguts erfasst. Bei einer ausgerichteten Beladung des Transportbehälters mit dem Stückgut ist insbesondere das Längenmaß entscheidend für die Zuordnung des Stückguts.

Das Hintergrundsystem im Sinne der Erfindung kann im Flughafen-Gepäckfördersystemen in einem Supervisory Control and Data Acquisition (SCADA)-System integriert sein, welche in Flughafen-Gepäckfördersystemen technische Prozesse überwachen und steuern.

Um das Verfahren zu optimieren, können ein oder mehrere der Verfahrensschritte automatisiert durchgeführt werden.

Gemäß einer Ausführungsform können die Verfahrensschritte erfolgen: Bereitstellen eines passiven Lastaufnahmemittels dimensioniert zur Aufnahme von mindestens zwei mit jeweils mindestens einem Stückgut beladener Transportbehälter und Beladen des Lastaufnahmemittels mit diesen mindestens zwei Transportbehältern, wobei diese mindestens zwei Transportbehälter ganz oder zumindest teilweise auf dem passiven Lastaufnahmemittel aufliegend auf der oder den aktiven Förderstrecke transportiert werden. Das Beladen des Lastaufnahmemittels erfolgt vor der Durchführung des Verfahrensschritts f).

Die auf dem passiven Lastaufnahmemittel aufliegenden Transportbehälter werden somit indirekt auf der Förderstrecke aufliegend transportiert. Es ist möglich, das Verfahren so zu betreiben, dass alle oder nur einige der Transportbehälter auf dem passiven Lastaufnahmemittel aufliegend transportiert werde. Weitere, nicht auf dem Lastaufnahmemittel aufliegenden Transportbehälter können direkt auf der Förderstrecke aufliegend transportiert werden. Das passive Lastaufnahmemittel kann auf vielfältige Weise ausgestaltet sein, beispielsweise als Palette.

Gemäß einer Ausführungsform kann das passive Lastaufnahmemittel ein Transportbehälter erster Klasse sein. So werden nur kleinere Transportbehälter (zweiter oder höherer Klasse) indirekt auf den Förderstrecken aufliegend transportiert werden und die Transportbehälter erster Klasse direkt auf den Förderstrecken aufliegend transportiert werden. Das Verfahren benötigt weniger unterschiedliche Elemente, große Transportbehälter erster Klasse können sowohl zur Aufnahme von Stückgütern erster Klasse, als auch zur Aufnahme von mit Stückgütern befüllten kleineren Transportbehältern zweiter (und höherer) Klasse herangezogen werden.

Gemäß einer Ausführungsform kann das Erfassen der mindestens einen Abmessung des Stückguts durchgeführt werden mit einem oder mehreren optischen Sensoren, beispielsweise Kameras, Lichtschranken und/oder Lichttaster, wobei der oder die optischen Sensoren oberhalb und/oder entlang und/oder quer zu einer Bewegungsrichtung des Stückguts angeordnet sind. Gemäß einer Ausführungsform kann das Beladen und/oder ein Entladen des Transportbehälters mit dem Stückgut von oben und/oder seitlich erfolgt.

Gemäß einer Ausführungsform kann der Transportbehälter erster Klasse eine erste Länge und eine erste Breite und der Transportbehälter zweiter Klasse eine zweite Länge und eine zweite Breite aufweisen, wobei die erste Länge größer oder gleich groß wie die erste Breite und die zweite Länge größer oder gleich groß wie die zweite Breite sein kann. Die Transportbehälter sind somit rechteckig oder quadratisch. Die erste Länge kann größer oder gleich groß wie die zweite Länge und die erste Breite größer oder gleich groß wie die zweite Breite sein. So passt ein Transportbehälter zweiter Klasse auf einen Transportbehälter erster Klasse. Vorzugsweise die erste Breite ist im Wesentlichen mindestens ein Vielfaches der zweiten Breite und/oder die erste Länge ist im Wesentlichen mindestens ein Vielfaches der zweiten Länge. So kann eine optimale Platzausnutzung erfolgen. Die Formulierung im Wesentlichen mindestens ein Vielfaches bedeutet, dass die Längen und/oder Breiten der Transportbehälter derart aufeinander angepasst dimensioniert sind, dass zwei oder mehr Transportbehälter mit allfällig notwendigen Zwischenräumen die Länge bzw. Breite von einem Transportbehälter erster Klasse ausfüllen.

Gemäß einer Ausführungsform kann zudem erfolgen ein Bereitstellen von Transportbehältern einer weiteren, dritten Klasse und Durchführen des erfindungsgemäßen Verfahrens nach einem der Ansprüche 1 bis 4 unter Verwendung der Transportbehälter dritter Klasse, wobei der Transportbehälter dritter Klasse kleiner als der Transportbehälter erster Klasse und kleiner oder anders dimensioniert als der Transportbehälter zweiter Klasse ist und die erfindungsgemäßen Verfahrensschritte können durchgeführt werden unter Verwendung der Transportbehälter dritter Klasse, sowie der Transportbehälter erster und zweiter Klasse.

Gemäß einer Ausführungsform können die Dimensionen des Transportbehälters dritter Klasse ebenso vorteilhaft ausgewählt und auf die Dimensionen der Transportbehälter erster und zweiter Klasse angepasst werden. So kann der Transportbehälter dritter Klasse eine dritte Breite und eine dritte Länge aufweisen, wobei die dritte Breite kleiner oder gleich groß wie die zweite Breite sein kann und die dritte Länge kleiner oder gleich groß wie die zweite Länge sein kann. Vorzugsweise die erste Breite kann im Wesentlichen mindestens ein Vielfaches der dritten Breite sein und/oder die erste Länge im Wesentlichen mindestens ein Vielfaches der dritten Länge. Selbiges kann gelten für die Längen- und Breitenverhältnisse der Transportbehälter zweiter und dritter Klasse.

Gemäß einer Ausführungsform können die passiven Lastaufnahmemittel mit ersten Haltemitteln und die Transportbehälter mit zweiten Haltemitteln versehen sein und die ersten Haltemittel zum Zusammenwirken, insbesondere zum formschlüssigen Zusammenwirken, mit den zweiten Haltemitteln ausgestaltet sein, indem die zusammenwirkenden ersten und zweiten Haltemittel eine Bewegung des auf dem passiven Lastaufnahmemittel aufliegenden Transportbehälters beschränken.

Gemäß einer Ausführungsform kann das Beladen eines Transportbehälters abhängig von seiner Klasse an einer Beladestelle entsprechender Klasse erfolgen, wobei die Beladestellen unterschiedlicher Klassen nicht übereinstimmen. Oder das Beladen eines Transportbehälters kann unabhängig von seiner Klasse an einer gemeinsamen Beladestelle erfolgen, wobei zuvor der zugeordnete Transportbehälter zugeführt wird hin zu der gemeinsamen Beladestelle. In der zweiten Alternative stimmen die Förderwege der Transportbehälter unterschiedlicher Klassen vor dem Beladen an ihrer Beladestelle nicht überein, wobei hierunter auch ein nur teilweises nicht übereinstimmen fällt. So können nahe der Beladestelle separate Speicher für die Transportbehälter erster und zweiter Klasse angeordnet werden, so dass ein Bereitstellen der Transportbehälter an die Beladestelle schnell erfolgen kann. Unter einer gemeinsamen Beladestelle soll eine klassenunabhängige Beladestelle verstanden werden, an der Transportbehälter erster und zweiter Klasse gleichermaßen beladen werden können. So kann das Beladen der Transportbehältern erster und zweiter Klasse mit nur einer Beladevorrichtung durchgeführt werden, allerdings muss selektiv zum richtigen Zeitpunkt ein dem Stückgut zugeordneter Transportbehälter der richtigen Klasse an der gemeinsamen Beladestelle bereitgestellt werden.

Gemäß einer Ausführungsform kann ein Festlegen von Abmessungen der Transportbehälter erster und/oder zweiter Klasse in Abhängigkeit von einem auf dem Fördersystem transportiertem Spektrum von Stückgütern erfolgen.

Gemäß einer Ausführungsform kann ein Zwischenspeichern des mit dem Stückgut beladenen Transportbehälters (bzw. mehrerer beladener Transportbehälter) in einem von dem Fördersystem umfassten Zwischenspeicher erfolgen, vorzugsweise vor Erreichen des (End-)Sortierziels. Der Zwischenspeicher agiert als Frühgepäckspeicher. In den Zwischenspeichern werden die einem bestimmten Ziel (ein bestimmtes Flugzeug, ein bestimmtes Auslieferfahrzeug) zugeordneten Stückgüter in ihren Transportbehältern zwischengelagert, beispielsweise gestapelt. In einer besonders vorteilhaften Ausgestaltung kann der Zwischenspeicher zum Stapeln der Transportbehälter ausgestaltet sein, wobei in einer besonders vorteilhaften Ausgestaltung die Abmessungen der Transportbehälter erster und zweiter Klasse derart aufeinander abgestimmt sein können, dass Transportbehälter unterschiedlicher Klassen aufeinander stapelbar sind. So können die Maße der Transportbehälter erster und zweiter Klasse einander angepasst sein, so dass beispielsweise zwei Transportbehälter zweiter Klasse auf einen Transportbehälter erster Klasse gestapelt werden können. Aber auch, dass sich die Transportbehälter erster und zweiter Klasse nur in ihrer Höhe unterscheiden oder dass die Transportbehälter unterschiedlicher Klassen nicht aufeinander stapelbar sind, ist möglich. Es ist auch möglich, die Transportbehälter einzeln von einem passiven Lastaufnahmemittel zu entnehmen. Möglich ist jedoch auch die gemeinsame Aufnahme in den Zwischenspeicher von allen auf einem Lastaufnahmemittel aufliegender Transportbehältern.

Hinsichtlich einer Vorrichtung wird die vorstehend genannte Aufgabe gelöst durch ein Fördersystem für Stückgüter variabler Größe in Transportbehältern umfassend Mittel zur Durchführung des erfindungsgemäßen Verfahrens. Das Fördersystem weist, soweit übertragbar, die gleichen Vorteile auf, welche bezüglich des vorgestellten Verfahrens aufgeführt sind.

Gemäß einer Ausführungsform kann das Fördersystem umfassen mindestens eine Einbringstelle zum Einbringen von Stückgüter unabhängig von ihrer Abmessung das Fördersystem. Zudem kann das Fördersystem umfassen Transportbehälter einer ersten und einer zweiten Klasse ausgestaltet zur Aufnahme von jeweils einem Stückgut, wobei die Transportbehälter erster Klasse größer sind als die Transportbehälter zweiter Klasse.

Das Fördersystem kann aufweisen aktive Förderstrecken zum Transport von Transportbehältern erster und zweiter Klasse, wobei die Transportbehälter auf denselben aktiven Förderstrecken des Fördersystems transportierbar sind. Das Fördersystem kann umfassen eine Erfassungseinheit zum automatisierten Erfassen mindestens einer Abmessung, vorzugsweise einer Länge, eines Stückguts und ein Hintergrundsystem zum automatisiertes Zuordnen des Stückguts zu einem Transportbehälter erster oder zweiter Klasse in Abhängigkeit von der erfassten Abmessung des Stückguts durch ein von dem Fördersystem umfasstes Hintergrundsystem. Zudem eine Beladestelle zum automatisierten Beladen des zugeordneten Transportbehälters mit dem Stückgut und die aktiven Förderstrecken können ausgestaltet sein zum Transportieren des mit dem Stückgut beladenen Transportbehälters hin zu einem dem Stückgut zugeordneten Sortierziel.

Das Fördersystem kann gemäß einer Ausführungsform zudem umfassen passive Lastaufnahmemittel dimensioniert zur Aufnahme von mindestens zwei mit jeweils mindestens einem Stückgut beladener Transportbehältern, wobei die passiven Lastaufnahmemittel auf den aktiven Förderstrecken aufliegend transportierbar sind, wobei das passive Lastaufnahmemittel ein Transportbehälter erster Klasse sein kann.

Das Fördersystem kann gemäß einer Ausführungsform zudem umfassen mindestens eine Beladestelle für das Beladen der Transportbehälter mit Stückgütern, wobei das Fördersystem für jede Klasse von Transportbehälter eigene Beladestellen aufweist, wobei die Beladestellen unterschiedlicher Klassen nicht übereinstimmen oder wobei die mindestens eine Beladestelle eine gemeinsame Beladestelle für Transportbehälter jeder Klasse ist.

Das Fördersystem kann gemäß einer Ausführungsform zudem umfassen Transportbehältern einer weiteren, dritten Klasse. Die Maße der Transportbehälter unterschiedlicher Klassen können in dem erfindungsgemäßen Fördersystem analog dem Verfahren aufeinander abgestimmt werden.

Gemäß einer Ausführungsform kann das Fördersystem eine gemeinsame Beladestelle aufweisen, die ausgestaltet ist zum Beladen von Transportbehältern erster und zweiter Klasse. So benötigt das Beladen der Transportbehältern erster und zweiter Klasse nur eine Beladevorrichtung, allerdings muss selektiv zum richtigen Zeitpunkt ein dem Stückgut zugeordneter Transportbehälter der richtigen Klasse an die gemeinsame Beladestelle bereitgestellt werden.

Gemäß einer weiteren Ausführungsform kann das Fördersystem aufweisen eine erste Beladestelle zum Beladen eines Transportbehälters erster Klasse und eine zweite Beladestelle zum Beladen eines Transportbehälters zweiter Klasse, wobei die erste und die zweite Beladestelle nicht miteinander übereinstimmen. So müssen Stückgüter je nach ihrer Zuordnung zu einem Transportbehälter erster bzw. zweiter Klasse an die erste bzw. zweite Beladestelle transportiert werden, was - wenn diese nicht nah beieinander positioniert sind - zwei Beladevorrichtungen erfordert. Bei hohem Stückgutvolumen sind jedoch häufig sowieso mehrere Beladevorrichtungen für das Beladen aller Stückgüter erforderlich, so dass durch die verschiedenen Beladestellen keine zusätzliche Redundanz auftritt. Zudem können so die Beladevorrichtung speziell für das Beladen der Transportbehälter erster bzw. zweiter Klasse optimiert ausgestaltet werden.

Gemäß einer weiteren Ausführungsform kann das Fördersystem aufweisen eine erste und eine zweite Zuführstrecke für ein separates Zuführen von Transportbehältern erster und zweiter Klasse zu ihrer Beladestellen.

Gemäß einer weiteren Ausführungsform kann das Fördersystem aufweisen einen oder mehrere optischen Sensoren, beispielsweise Kameras, Lichtschranken und/oder Lichttaster, wobei der oder die optischen Sensoren oberhalb und/oder entlang und/oder quer zu einer Bewegungsrichtung des Stückguts angeordnet sind, wobei der oder die optischen Sensoren ausgestaltet sind, die Abmessungen eines Stückguts vor dem Beladen der Transportbehälter zu ermitteln.

Gemäß einer weiteren Ausführungsform können die passiven Lastaufnahmemittel mit ersten Haltemitteln und die Transportbehälter mit zweiten Haltemitteln versehen sein und die ersten Haltemittel zum Zusammenwirken, insbesondere zum formschlüssigen Zusammenwirken, mit den zweiten Haltemitteln ausgestaltet sein, indem die zusammenwirkenden ersten und zweiten Haltemittel eine Bewegung des auf dem passiven Lastaufnahmemittel aufliegenden Transportbehälters beschränken.

Ausführungsformen der Erfindung werden nachfolgend anhand der Figuren beispielsweise näher erläutert. Dabei zeigen:
- Figur 1: ein erfindungsgemäßes Fördersystem mit gemeinsamer Beladestelle für Transportbehälter erster und zweiter Klasse in Aufsicht (Figur 1a) und in seitlicher Ansicht (Figur 1b);
- Figur 2: ein erfindungsgemäßes Fördersystem mit erster und zweiter Beladestelle jeweils für Transportbehälter erster und zweiter Klasse;
- Figur 3: Transportbehälter unterschiedlicher Klassen;
- Figur 4: Anordnungen Transportbehälter unterschiedlicher Klassen auf einem Lastaufnahmemittel.

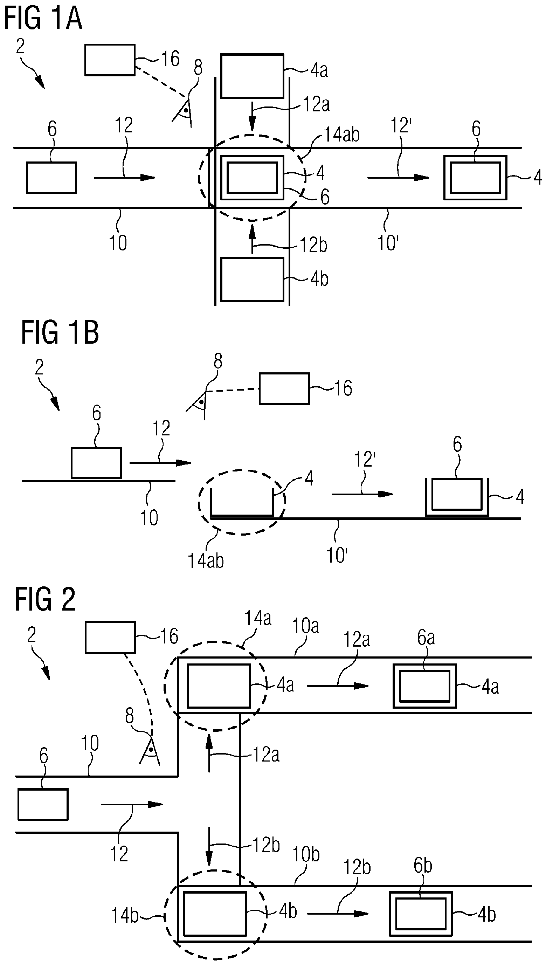

Figur 1 zeigt gemäß einer Ausführungsform der Erfindung ein erfindungsgemäßes Fördersystem 2 mit gemeinsamer Beladestelle 14ab für Transportbehälter erster und zweiter Klasse 4a, 4b in Aufsicht (Figur 1a) und in seitlicher Ansicht (Figur 1b). Figur 2 zeigt gemäß einer weiteren Ausführungsform ein erfindungsgemäßes Fördersystem 2 mit zwei separaten Beladestellen 14a, 14b: eine erste Beladestelle 14a für Transportbehälter erster Klasse 4a und eine zweite Beladestelle 14b für Transportbehälter zweiter Klasse 4b.

In beiden Ausführungsformen wird zunächst das Gepäckstück 6 in das Fördersystem 2 eingebracht (an einem Check-in Schalter, Baggage-Drop-Off, Entladung eines Flugzeugs, o.ä) und anschließend auf einer Förderstrecke 10 entlang einer Förderrichtung 12 in einen Erfassungsbereich von mindestens einem Sensor 8 transportiert. Der Sensor 8 erfasst mindestens eine, vorzugsweise alle äußeren Abmessungen des Gepäckstücks 6 und übermittelt diese an ein Hintergrundsystem 16. Das Hintergrundsystem 16 ordnet basierend auf den erfassten Abmessungen das Stückgut einem größeren Transportbehälter erster Klasse 4a oder einem kleineren Transportbehälter zweiter Klasse 4b zu. Anschließend wird das Gepäckstück 6 hin zu der Beladestelle 14ab, 14a, 14b transportiert. Die Aufteilung der Stückgüter in unterschiedliche Klassen erfolgt erst nach dem Einbringen in das Fördersystem an der gleichen Einbringstelle. An den Beladestellen 14ab, 14a, 14b werden die Transportbehälter 4a, 4b für das Beladen bereitgestellt und die einem Stückgut 6 zugeordneten Transportbehälter 4a, 4b werden beladen.

Es gibt verschiedene Möglichkeiten, die Abmessungen eines Gepäckstücks 6, sowie seine Lage mittels eines oder mehrere Sensoren 8 zu erkennen. Einfach realisierbar sind mit unterschiedlichen Abständen (z.B. 2,5mm) entlang der Förderstrecke 10 aneinander gereihte Lichtschranken als Lichtgitterlösung. Durchfährt ein Koffer ein Lichtgitter, kann zu jedem Zeitpunkt des Durchfahrens die Menge der blockierten Lichtschranken aufgezeichnet werden. Geschieht dies zu mehreren Zeitpunkten entsteht ein 2D Bild der blockierten Fläche. Werden zwei Lichtgitter um 90 Grad gedreht eingesetzt, entstehen zwei 2D Bilder. Aus diesen kann man eine obere Schranke für die Höhe, Länge, Breite und des Volumens des Koffers ausleiten. Der Sensor 8 kann auch eine Kamera sein und das Hintergrundsystem 14 kann anhand der aufgenommenen Abbilder die Abmessungen der Gepäckstücke 6 ermitteln. Für das Ermitteln aller äußerer Abmessungen (Länge, Breite, Höhe) ist es erforderlich, die Sensoren 8 oberhalb und/oder entlang und/oder quer zu einer Bewegungsrichtung 12 der Gepäckstücke 6 anzuordnen. Der Sensor 8 kann auch eine einfache Lichtschranke sein und anhand der Verdunkelungszeit und der Transportgeschwindigkeit kann dann die Länge des Gepäckstücks 6 in Transportrichtung 12 berechnet werden.

Im Falle einer gemeinsamen, klassenunabhängigen Beladestelle 14ab (Figur 1) für Transportbehälter erster und zweiter Klasse 4a, 4b wird jedes Stückgut 6 zu der gemeinsamen Beladestelle 14ab transportiert - unabhängig von der Zuordnung Stückgut 6 - Transportbehälter 4a, 4b. Ein Transportbehälter erster Klasse 4a wird auf einem ersten Förderweg 12a hin zu der gemeinsamen Beladestelle 14ab transportiert und ein Transportbehälter zweiter Klasse 4b wird auf einem zweiten Förderweg 12b hin zu der gemeinsamen Beladestelle 14ab transportiert. Die Größe des (größeren) Transportbehälters erster Klasse 4a bestimmt die maximal zulässigen Abmessungen eines kleineren Stückguts zweiter Klasse 6b.

Im Falle zweier separater Beladestellen erster und zweiter Klasse 14a, 14b (Figur 2) für Transportbehälter erster und zweiter Klasse 4a, 4b wird jedes Stückgut 6 zu seiner Beladestelle 14a, 14b transportiert (die zugeordnete Klasse der Transportbehälter 4a, 4b entspricht der Beladestellenklasse 14a, 14b). Ein Transportbehälter erster Klasse 4a wird auf einem ersten Förderweg 12a hin zu der erste Beladestelle 14ab transportiert und ein Transportbehälter zweiter Klasse 4b wird auf einem zweiten Förderweg 12b hin zu der zweiten Beladestelle 14b transportiert. Die Transportwege der Stückgüter 6 erster und zweiter Klasse teilen sich auf, das Beladen der Transportbehälter erster und zweiter Klasse 4a, 4b erfolgt an den eigenen Beladestellen 14a, 14b und erst nach dem Beladen werden die Transportwege 12a, 12b der beladenen Transportbehälter 14 wieder zusammengeführt (hier nicht gezeigt).

Figur 1b zeigt eine Beladung der Transportbehälter 4a, 4b an der gemeinsamen Beladestelle 14ab von oben - die aufnehmende Förderstrecke 10', auf welcher die Transportbehälter 4a, 4b transportiert werden, ist unterhalb dem abgebenden Förderband 10. Das Beladen kann mit einer roboterartigen separaten Beladevorrichtung, ausgestaltet in der Art eines Greifroboters, erfolgen oder auch einfach durch eine Anordnung der Transportbehälter 4a, 4b seitlich und unterhalb der oberen Förderstrecke 10, so dass ein Stückgut 6 einfach in den Transportbehälter 6 hinein fällt. Ein Beladen von der Seite bei gleicher Höhe der Förderstrecken 10, 10' ist nicht separat gezeigt, aber natürlich selbstverständlich möglich, genauso wie andere Arten der Beladung. Die Transportbehälter 4 können auf unteren Förderbändern 10' zu ihrer Beladestelle 14ab, 14a, 14b transportiert werden.

Das Gepäckspektrum eines Passagierflughafens weist typischerweise eine ähnliche Streuung der Abmessungen Länge und Breite auf. Die maximale Länge eines Gepäckstücks ist entscheidend ob das Gepäckstück noch in einen kleineren Transportbehälter zweiter (oder dritter, vierter...) Klasse passt oder nur von einem Transportbehälter erster Klasse aufgenommen werden kann. Typischerweise ist nur ein sehr geringer Anteil sehr lang und ebenfalls nur ein sehr geringer Anteil sehr kurz. Bislang sind die Abmessungen der Transportbehälter 4 an Flughäfen für Normalgepäck 6 derart gewählt, dass sie nahezu alles Normalgepäck 6 aufnehmen können. Größere Transportbehälter kommen nur bei Sperrgepäck zum Einsatz, wobei es einen separaten Sperrgepäckschalter gibt, so dass das Sperrgepäck nicht am gleichen Ort wie das Normalgepäck 6 in das Fördersystem 2 eingebracht wird. Da Sperrgepäck häufig sorgsam behandelt werden muss (Fahrräder, anderes Sportgepäck, Kinderwägen, ...), erfolgt eine manuelle oder zumindest manuell unterstützte Beladung dieser Transportbehälter.

Gemäß einer Ausführungsform werden die Abmessungen der Transportbehälter erster und/oder zweiter Klasse 4a, 4b gewählt, um IATA Standard-Gepäckgrößen aufzunehmen. Die Transportbehälter 4a, 4b sind stapelbar ausgestaltet und können so in einem Zwischenspeicher (z.B. ein Frühgepäckspeicher) platzsparend aufeinandergestapelt gespeichert werden. Die Wahl der Abmessungen und die Wahl der Anzahl der Transportbehälter unterschiedlicher Klasse 4a, 4b, 4c Transportbehälter erster und zweiter Klasse 4a, 4b erfolgt gemäß einer Ausführungsform abhängig von dem typischen Gepäckspektrum eines Flughafens: wenn die meisten Passagiere mit großen Gepäckstücken 6 reisen, werden mehr Transportbehälter erster Klasse 4a bereitgestellt und/oder die Abmessungen der Transportbehälter erster und zweiter Klasse 4a, 4b werden dementsprechend angepasst. Ein Großteil der Gepäckstücke 6 (70-80%) soll in die Transportbehälter zweiter Klasse 4b passen. Ein Transportbehälter zweiter Klasse 4b ist sehr viel kleiner dimensioniert als ein Transportbehälter erster Klasse 4a. Auf diese Weise wird in Frühgepäckspeichern sehr viel weniger "leere Luft" gestapelt und die Kapazität der Frühgepäckspeicher kann stark erhöht werden. 20-40% Kapazitätserhöhung sind bereits bei nur zwei Klassen an Transportbehältern 4a, 4b realistisch. Die Verteilung zwischen den Transportbehälterklassen 4a, 4b und die genauen Abmessungen können individuell vom Flughafen als Endkunden bestimmt werden. Es können auch mehr als zwei Klassen von Transportbehältern 4a, 4b, 4c für eine noch bessere Raumausnutzung herangezogen werden, allerdings erhöht dies auch die logistische Komplexität. Alle Verfahrensschritte werden teilweise oder komplett automatisiert durchgeführt.

Die Förderstrecken 10 sind aktive Förderstrecken, so dass die auf ihnen direkt oder indirekt aufliegenden Transportbehälter keine eigenen Antriebseinheit aufweisen müssen.

Gemäß einer Ausführungsform wird ein passives Lastaufnahmemittel 18 bereitgestellt. Die Transportbehälter 4a, 4b werden auf das Lastaufnahmemittel 18 aufgelegt und auf diesem aufliegend entlang der Förderstrecken 10 des Fördersystems 2 zu ihren Sortierzielen transportiert. Das Heranziehen eines Lastaufnahmemittels 18 bündelt die Transportbehälter 4a, 4b, so dass das Verfahren noch platzsparender ist und somit die Kapazität des Fördersystems 2 erhöht wird. Hintereinander und individuell transportierte Transportbehälter 4a, 4b erfordern hingegen einen Abstand.

Gemäß einer Ausführungsform werden Transportbehälter dritter Klasse 4c, die kleiner oder anders dimensioniert sind als Transportbehälter zweiter Klasse 4a, bereitgestellt. Das erfindungsgemäße Verfahren wird unter Verwendung der Transportbehälter erster, zweiter und dritter Klasse 4a, 4b, 4c durchgeführt. Die Transportbehälter 4a, 4b, 4c sind derart aufeinander angepasst dimensioniert, dass der Platz auf dem passiven Lastaufnahmemittel 18 so effizient wie möglich genutzt wird. Die Transportbehälter 4a, 4b, 4c weisen jeweils Längen L1, L2, L3 und kleiner oder gleich große Breiten B1, B2, B3 auf. Vorzugsweise beträgt die erste Breite B1 im Wesentlichen mindestens ein Vielfaches der zweiten Breite B2 und/oder die erste Länge L1 im Wesentlichen mindestens ein Vielfaches der zweiten Länge L2. Die dritte Breite B3 ist vorzugsweise kleiner oder gleich groß wie die zweite Breite B2 und die dritte Länge L3 kleiner oder gleich groß wie die zweite Länge L2. Vorzugsweise beträgt die erste Breite B1 im Wesentlichen mindestens ein Vielfaches der dritten Breite B3 und/oder die erste Länge L1 im Wesentlichen mindestens ein Vielfaches der dritten Länge L3.

Die Lastaufnahmemittel 18 sind gemäß einer Ausführungsform mit ersten Haltemitteln und die Transportbehälter 4a, 4b, 4c mit zweiten Haltemitteln versehen. Die ersten Haltemittel sind zum Zusammenwirken, insbesondere zum formschlüssigen Zusammenwirken, mit den zweiten Haltemitteln ausgestaltet, indem die zusammenwirkenden ersten und zweiten Haltemittel eine Bewegung des auf dem passiven Lastaufnahmemittel aufliegenden Transportbehälters 4a, 4b, 4c beschränken.

Das passive Lastaufnahmemittel 18 kann ein Transportbehälter erster Klasse 4a sein. Hierbei kann dieser Transportbehälter erster Klasse 4a einen weiteren Transportbehälter erster Klasse 4a aufnehmen oder nur weitere Transportbehälter zweiter und/oder dritter Klasse 4b, 4c.

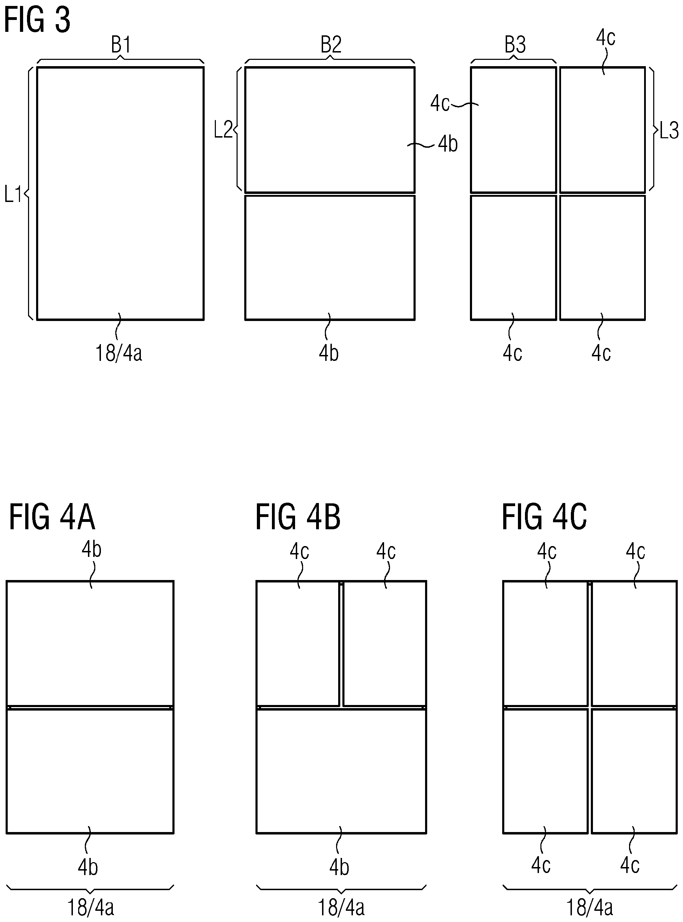

Figur 3 zeigt gemäß einer Ausführungsform Transportbehälter erster, zweiter und dritter Klasse 4a, 4b, 4c. In der schematischen Ansicht von oben kann der Transportbehälter erster Klasse 4a auch ein passives Lastaufnahmemittel 18 sein. Die Längen L1, L2, L3 und Breiten B1, B2, B3 der Transportbehälter 4a, 4b, 4c sind derart aufeinander abgestimmt, dass zwei Transportbehälter zweiter Klasse 4b, sowie vier Transportbehälter dritter Klasse 4c den Platz eines Transportbehälters erster Klasse 4a einnehmen.

Figur 4 zeigt Ausführungsformen der Anordnung von Transportbehältern 4b, 4c auf einem Lastaufnahmemittel 18 mit aufeinander angepasst dimensionierten Transportbehältern 4a, 4b, 4c und Lastaufnahmemittel 18. Zwei Transportbehälter zweiter Klasse 4b auf einem Lastaufnahmemittel 18 (Figur 4a). Zwei Transportbehälter dritter Klasse 4c und ein Transportbehälter zweiter Klasse 4b auf einem Lastaufnahmemittel 18 (Figur 4c). Und vier Transportbehälter dritter Klasse 4c auf einem Lastaufnahmemittel 18 (Figur 4c).

### Bezugszeichenliste

- 2: Fördersystem
- 4: Transportbehälter
- 6: Stückgut
- 8: Sensor
- 10: Förderstrecke, Zuführstrecke
- 12: Förderrichtung
- 14: Beladestelle
- 14a/b: erste/zweite Beladestelle
- 14ab: gemeinsame Beladestelle
- 16: Hintergrundsystem
- 18: passives Lastaufnahmemittel
- B1, B2, B3: Breite
- L1, L2, L3: Länge

## Patentansprüche

1. Verfahren zum optimierten Betreiben eines Fördersystems (2) für Stückgüter (6) variabler Größe in Transportbehältern (4), insbesondere für Gepäckstücke eines Flughafen-Gepäckfördersystems, wobei das Fördersystem aktive Förderstrecken (10) umfasst, **gekennzeichnet durch** die Verfahrensschritte:
a) Einbringen eines Stückguts (6) an einer Einbringstelle in das Fördersystem (2), wobei weitere Stückgüter (6) unabhängig von ihrer Abmessung an derselben Einbringstelle in das Fördersystem (2) eingebracht werden können;
b) Bereitstellen von Transportbehältern einer ersten und einer zweiten Klasse (4a, 4b) zur Aufnahme von jeweils einem Stückgut (6), wobei die Transportbehälter erster Klasse (4a) grösser sind als die Transportbehälter zweiter Klasse (4b) und die Transportbehälter (4a, 4b) auf denselben aktiven Förderstrecken (10) des Fördersystems (2) transportierbar sind;
c) automatisiertes Erfassen mindestens einer Abmessung, vorzugsweise einer Länge, des Stückguts (6);
d) in Abhängigkeit von der erfassten Abmessung des Stückguts (6) automatisiertes Zuordnen des Stückguts (6) zu einem Transportbehälter erster oder zweiter Klasse (4a, 4b) durch ein von dem Fördersystem (2) umfasstes Hintergrundsystem (16) ;
e) Transportieren des Stückguts (6) hin zu einer Beladestelle und automatisiertes Beladen des zugeordneten Transportbehälters (4a, 4b) mit dem Stückgut (6) an der Beladestelle;
f) Transportieren des mit dem Stückgut (6) beladenen Transportbehälters (4a, 4b) auf der oder den aktiven Förderstrecken (10) hin zu einem dem Stückgut (6) zugeordneten Sortierziel;
g) Durchführen der Verfahrensschritte a) bis f) für ein weiteres Stückgut (6).

2. Verfahren nach Anspruch 1, zudem umfassend den Verfahrensschritt
Bereitstellen eines passiven Lastaufnahmemittels (18) dimensioniert zur Aufnahme von mindestens zwei mit jeweils mindestens einem Stückgut beladener Transportbehälter (4a, 4b, 4c) und Beladen des Lastaufnahmemittels mit diesen mindestens zwei Transportbehältern (4a, 4b, 4c), wobei diese mindestens zwei Transportbehälter (4a, 4b, 4c) ganz oder zumindest teilweise auf dem passiven Lastaufnahmemittel (18) aufliegend auf der oder den aktiven Förderstrecke (10) transportiert werden.

3. Verfahren nach Anspruch 2, **dadurch gekennzeichnet, dass** das passive Lastaufnahmemittel (18) ein Transportbehälter erster Klasse (4a) ist.

4. Verfahren nach einem der Ansprüche 1 bis 3, **dadurch gekennzeichnet, dass**
der Transportbehälter erster Klasse (4a) eine erste Länge (L1) und eine erste Breite (B1) und der Transportbehälter zweiter Klasse (4b) eine zweite Länge (L2) und eine zweite Breite (B2) aufweist, wobei die erste Länge (L1) größer oder gleich groß wie die erste Breite (B1) ist und die zweite Länge (L2) größer oder gleich groß wie die zweite Breite (B2) ist und die erste Länge (L1) größer oder gleich groß wie die zweite Länge (L2) ist und die erste Breite (B1) größer oder gleich groß wie die zweite Breite (B2) ist, wobei vorzugsweise die erste Breite (B1) im Wesentlichen mindestens ein Vielfaches der zweiten Breite (B2) ist und/oder die erste Länge (L1) im Wesentlichen mindestens ein Vielfaches der zweiten Länge (L2) ist.

5. Verfahren nach einem der Ansprüche 1 bis 4, zudem umfassend die Verfahrensschritte
a) Bereitstellen von Transportbehältern einer weiteren, dritten Klasse (4c) und Durchführen des Verfahrens nach einem der Ansprüche 1 bis 4 unter Verwendung der Transportbehälter dritter Klasse (4c), wobei der Transportbehälter dritter Klasse (4c) kleiner als der Transportbehälter erster Klasse (4a) und kleiner oder anders dimensioniert als der Transportbehälter zweiter Klasse (4c) ist;
b) Durchführen der Verfahrensschritte nach einem der Ansprüche 1 bis 4 unter Verwendung der Transportbehälter dritter Klasse.

6. Verfahren nach Anspruch 5, **dadurch gekennzeichnet, dass** der Transportbehälter dritter Klasse (4c) eine dritte Breite (B3) und eine dritte Länge (L3) aufweist, wobei die dritte Breite (B3) kleiner oder gleich groß wie die zweite Breite (B2) ist und die dritte Länge (L3) kleiner oder gleich groß wie die zweite Länge (L2) ist, wobei vorzugsweise die erste Breite (B1) im Wesentlichen mindestens ein Vielfaches der dritten Breite (B3) ist und/oder die erste Länge (L1) im Wesentlichen mindestens ein Vielfaches der dritten Länge (L3) ist.

7. Verfahren nach einem der Ansprüche 2 bis 6, **dadurch gekennzeichnet, dass**
die passiven Lastaufnahmemittel (18) mit ersten Haltemitteln und die Transportbehälter (4a, 4b, 4c) mit zweiten Haltemitteln versehen sind und die ersten Haltemittel zum Zusammenwirken, insbesondere zum formschlüssigen Zusammenwirken, mit den zweiten Haltemitteln ausgestaltet sind, indem die zusammenwirkenden ersten und zweiten Haltemittel eine Bewegung des auf dem passiven Lastaufnahmemittel aufliegenden Transportbehälters (4a, 4b, 4c) beschränken.

8. Verfahren nach einem der Ansprüche 1 bis 7, **gekennzeichnet durch**
das Beladen eines Transportbehälters (4a, 4b, 4c) abhängig von seiner Klasse an einer Beladestelle entsprechender Klasse (14a, 14b, 14c), wobei die Beladestellen unterschiedlicher Klassen (14a, 14b, 14c) nicht übereinstimmen
oder
das Beladen eines Transportbehälters (4a, 4b, 4c) unabhängig von seiner Klasse an einer gemeinsamen Beladestelle (14ab), wobei zuvor der zugeordnete Transportbehälter (4a, 4b, 4c) zugeführt wird hin zu der gemeinsamen Beladestelle (14ab).

9. Verfahren nach einem der Ansprüche 1 bis 8, zudem umfassend den Verfahrensschritt
Zwischenspeichern des Transportbehälters (4a, 4b, 4c) in einem von dem Fördersystem (2) umfassten Zwischenspeicher.

10. Fördersystem (2) für Stückgüter (6) variabler Größe in Transportbehältern (4a, 4b, 4c) umfassend Mittel zur Durchführung des Verfahrens nach einem der Ansprüche 1 bis 9.

11. Fördersystem (2) nach Anspruch 10, umfassend
- mindestens eine Einbringstelle zum Einbringen von Stückgüter (6) unabhängig von ihrer Abmessung das Fördersystem (2);
- Transportbehälter einer ersten und einer zweiten Klasse (4a, 4b) ausgestaltet zur Aufnahme von jeweils einem Stückgut (6), wobei die Transportbehälter erster Klasse (4a) größer sind als die Transportbehälter zweiter Klasse (4b);
- aktive Förderstrecken (10) zum Transport von Transportbehältern erster und zweiter Klasse (4a, 4b), wobei die Transportbehälter (4a, 4b) auf denselben aktiven Förderstrecken (10) des Fördersystems (2) transportierbar sind;
- eine Erfassungseinheit zum automatisierten Erfassen mindestens einer Abmessung, vorzugsweise einer Länge, eines Stückguts (6);
- ein Hintergrundsystem (16) zum automatisiertes Zuordnen des Stückguts (6) zu einem Transportbehälter erster oder zweiter Klasse (4a, 4b) in Abhängigkeit von der erfassten Abmessung des Stückguts (6) durch ein von dem Fördersystem (2) umfasstes Hintergrundsystem (16);
- eine Beladestelle zum automatisierten Beladen des zugeordneten Transportbehälters (4a, 4b) mit dem Stückgut (6)
- die aktiven Förderstrecken (10) ausgestaltet sind zum Transportieren des mit dem Stückgut (6) beladenen Transportbehälters (4a, 4b) hin zu einem dem Stückgut (6) zugeordneten Sortierziel.

12. Fördersystem (2) nach einem der Ansprüche 10 bis 11, zudem umfassend
passive Lastaufnahmemittel dimensioniert zur Aufnahme von mindestens zwei mit jeweils mindestens einem Stückgut beladener Transportbehältern (4a, 4b), wobei die passiven Lastaufnahmemittel auf den aktiven Förderstrecken (10) aufliegend transportierbar sind, wobei das passive Lastaufnahmemittel (18) ein Transportbehälter erster Klasse (4a) sein kann.

13. Fördersystem (2) nach einem der Ansprüche 10 bis 12, zudem aufweisend
mindestens eine Beladestelle für das Beladen der Transportbehälter mit Stückgütern, wobei das Fördersystem für jede Klasse von Transportbehälter eigene Beladestellen aufweist, wobei die Beladestellen unterschiedlicher Klassen nicht übereinstimmen oder wobei die mindestens eine Beladestelle eine gemeinsame Beladestelle (14ab) für Transportbehälter jeder Klasse (4a, 4b) ist.

14. Fördersystem (2) nach einem der Ansprüche 9 bis 13, zudem umfassend
Transportbehältern einer weiteren, dritten Klasse (4c), wobei die Transportbehälter erster Klasse (4a) eine erste Länge (L1) und eine erste Breite (B1), die Transportbehälter zweiter Klasse (4b) eine zweite Länge (L2) und eine zweite Breite (B2) und die Transportbehälter dritter Klasse (4c) eine dritte Länge (L3) und eine dritte Breite (B3) aufweisen, wobei die erste Länge (L1) größer oder gleich groß wie die erste Breite (B1), die zweite Länge (L2) größer oder gleich groß wie die zweite Breite (B2) und die dritte Länge (L3) größer oder gleich groß wie die dritte Breite (B3) ist und die erste Länge (L1) größer oder gleich groß wie die zweite Länge (L2) ist und die erste Breite (B1) größer oder gleich groß wie die zweite Breite (B2) ist und die dritte Breite (B3) kleiner oder gleich groß wie die zweite Breite (B2) ist und die dritte Länge (L3) kleiner oder gleich groß wie die zweite Länge (L2) ist, wobei vorzugsweise die erste Breite (B1) im Wesentlichen mindestens ein Vielfaches der zweiten Breite (B2) ist und/oder die erste Länge (L1) im Wesentlichen mindestens ein Vielfaches der zweiten Länge (L2) ist und die erste Breite (B1) im Wesentlichen mindestens ein Vielfaches der dritten Breite (B3) ist und/oder die erste Länge (L1) im Wesentlichen mindestens ein Vielfaches der dritten Länge (L3) ist.

15. Fördersystem (2) nach einem der Ansprüche 9 bis 14,
die passiven Lastaufnahmemittel mit ersten Haltemitteln und die Transportbehälter (4a, 4b, 4c) mit zweiten Haltemitteln versehen sind und die ersten Haltemittel zum Zusammenwirken, insbesondere zum formschlüssigen Zusammenwirken, mit den zweiten Haltemitteln ausgestaltet sind, indem die zusammenwirkenden ersten und zweiten Haltemittel eine Bewegung des auf dem passiven Lastaufnahmemittel aufliegenden Transportbehälters (4a, 4b, 4c) beschränken.
